(19) **Europäisches Patentamt**
**European Patent Office**
**Office européen des brevets**

(11) **EP 1 437 744 A2**

(12) **EUROPEAN PATENT APPLICATION**

(43) Date of publication:
**14.07.2004 Bulletin 2004/29**

(51) Int Cl.[7]: **G21K 4/00**

(21) Application number: **04000272.7**

(22) Date of filing: **08.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **09.01.2003 JP 2003003167**
**09.01.2003 JP 2003003170**

(71) Applicant: **KONICA MINOLTA HOLDINGS, INC. Tokyo 100-0005 (JP)**

(72) Inventors:
• **Kishinami, Katsuya**
**Hino-shi Tokyo 191-8511 (JP)**
• **Maezawa, Akihiro**
**Hino-shi Tokyo 191-8511 (JP)**

(74) Representative: **Henkel, Feiler & Hänzel**
**Möhlstrasse 37**
**81675 München (DE)**

(54) **Radiographic image conversion panel**

(57) A radiographic image conversion panel (1) including a support (2) including a heat resistant resin (20); and a photostimulable phosphor layer (3) provided on a face of the support by a vapor phase deposition method. An average surface roughness in the face of the support to be provided with the phosphor layer is above 0.05 µm and not more than 0.5 µm.

# FIG.1

EP 1 437 744 A2

**Description**

BACKGROUND OF THE INVENTION

Field of the Invention

The present invention relates to a radiographic image conversion panel applied to image diagnostic using radiation rays such as X-rays and the like.

Description of Related Art

A radiographic image conversion panel for obtaining an image of a body of a subject by receiving irradiation of radiation rays such as X-rays or the like transmitted through the body of the subject in image diagnostic comprises a photostimulable phosphor layer having photostimulable phosphors for storing the energy of the received irradiation of the radiation rays. The phosphor layer is formed on a face of a support. It is preferable to form a photostimulable phosphor layer so that the layer thickness will become uniform in optimizing the shape and directivity of crystals of photostimulable phosphors and in making the sensitivity and sharpness high values suitable for the purpose of image diagnostic.

Here, as a material of the support, for example, a plate glass having an average surface roughness Ra of approximately 0.01 μm has been applied in earlier technology. On the other hand, a heat resistant resin film and a carbon fiber reinforced plastic are preferable as a support since the radiation absorption amount thereof is low compared with a glass, and therefore, loss of radiation rays is small even though in a case such that the radiation rays are irradiated from the opposite side of the photostimulable phosphor layer; so that the net sensitivity of the photostimulable phosphor layer can be improved, or since they are hard to be broken compared with a glass and their handling when attaching to an imaging apparatus, capturing at a reading apparatus, carrying and the like becomes easy. Therefore, recently, researches for applying heat resistant resin films or carbon fiber reinforced plastics as a support have been performed (See for example, Japanese Patent Application Laid-Open Publication No. 2002-303698).

However, in case of applying a heat resistant resin to a support, although the sensitivity and sharpness of a photostimulable phosphor layer become high when the photostimulable phosphor layer is formed according to a vapor phase deposition method by making the surface roughness the same level as a glass plate, there is a problem that the adhesiveness to the support is not sufficient, and the photostimulable phosphor layer is easily peeled off from the support. However, in the above-described Japanese Patent Application Laid-Open Publication No. 2002-303698, there is no description of methods for making handling easy by preventing peeling of the photostimulable phosphor layer from the support while enhancing the sensitivity and sharpness of the photostimulable phosphor layer.

Incidentally, formation of a photostimulable phosphor layer is preferable to be performed by a vapor phase deposition method such as evaporation method or the like since it is possible to easily provide the sensitivity and sharpness of a value suitable for the purpose of image diagnostic by controlling the shapes and the like of crystals of photostimulable phosphors and by providing the crystals at high density.

However, in the Japanese Patent Application Laid-Open Publication No. 2002-303698, although a radiographic image conversion panel formed by applying the photostimulable phosphor layer is described, there is no description of a radiographic image conversion panel having a photostimulable phosphor layer formed by a vapor phase deposition method.

On the other hand, in case of forming a photostimulable phosphor layer by a vapor phase deposition method, a substrate is exposed in a high temperature condition of 100°C or more. Thereby, there is a problem such that curvature is caused on the substrate and the photostimulable phosphor layer is cracked, or that the quality of the obtained image deteriorates.

SUMMARY OF THE INVENTION

An object of the present invention is to provide a radiographic image conversion panel having high sensitivity and high sharpness suitable for the purpose of image diagnostic, easy to handle, and without curvature.

In order to achieve the above-described object, according to a first aspect of the present invention, the radiographic image conversion panel of the present invention comprises a support including a heat resistant resin; and a photostimulable phosphor layer provided on a face of the support by a vapor phase deposition method, wherein an average surface roughness in the face of the support on which the phosphor layer is provided is above 0.05 μm and not more than 0.5 μm.

According to the radiographic image conversion panel in the above-described first aspect, the average surface roughness of the face in the side of the support where the photostimulable phosphor layer is provided is made to 0.05 µm. Thereby, the support and the photostimulable phosphor layer formed by the vapor phase deposition method are adhered with sufficient adhesive force. Accordingly, it becomes possible to easily handle the radiographic image conversion panel by preventing the photostimulable phosphor layer from being peeled off from the support.

Further, by making the average surface roughness of the above-described face not more than 0.5 µm, it becomes possible to optimize the shape and directivity of crystal by making the layer thickness of the phosphor layer formed by the vapor phase deposition method approximately uniform, and the sensitivity and sharpness of the phosphor layer can be made to high values suitable to the purpose of image diagnostic.

Further, by forming the support with the hear resistant resin, deformation of the support can be avoided even though in a case that the support is placed under high temperature condition in order to form the phosphor layer by the vapor phase deposition method. Furthermore, the heat resistant resin is hard to be cracked compared with a glass, and thereby also, it becomes possible to handle the radiographic image conversion panel easily.

According to these, a radiographic image conversion panel having high sensitivity and high sharpness suitable to the purpose of image diagnostic, and easy to handle can be provided.

Further, according to a second aspect of the present invention, the radiographic image conversion panel of the present invention comprises a support having a substrate including a carbon fiber reinforced plastic and a heat resistant resin film including a heat resistant resin, the film being provided on a face of the substrate; and a photostimulable phosphor layer provided by a vapor phase deposition method on a face of the film opposite side from the substrate, wherein an average surface roughness in the face of the film on which the phosphor layer is provided is above 0.05 µm and not more than 0.5 µm.

According to the radiographic image conversion panel in the above-described second aspect, the support is formed by providing the heat resistant resin film including the heat resistant resin on the face of the substrate including the carbon fiber reinforced plastic, and the average surface roughness of the face of the heat resistant resin film where the phosphor layer is provided is made to be above 0.05 µm and not more than 0. 5 µm. Thereby, the same effects as the radiographic image conversion panel in the above-described first aspect can be obtained.

Further, by making the structure of the support to have the heat resistant resin film and the substrate, undulation of the support can be prevented when forming the phosphor layer. Accordingly, it becomes possible to form a photostimulable phosphor layer so that the layer thickness will be further uniform. Further, since the carbon fiber reinforced resin has an absorptivity to radiation rays lower than a glass, radiation loss can be suppressed rather than in the case of supporting the support by a glass. Accordingly, a radiographic image conversion panel which can obtain an image having high sensitivity and high sharpness can be provided.

In the radiographic image conversion panel in the second aspect, preferably, two or more layers of unidirectional prepregs are laminated in the substrate.

Thus, by applying the unidirectional prepregs, in which carbon fibers are arranged in one direction, to the substrate, the effect of the carbon fibers to the surface shape of the support can be made small compared to woven fabric prepregs. Therefore, it becomes easy to keep the support flat. Further, by laminating two or more layers of unidirectional prepregs, the substrate has high rigidity. Therefore, it is possible to keep the support flat more effectively by preventing undulation of the support.

In the above-described first and second aspects, preferably, a maximum surface roughness in a face of the support on which the phosphor layer is provided is above 0.1 µm and not more than 1.0 µm.

The adhesiveness of the support and the phosphor layer can be further enhanced by making the maximum surface roughness in the face of the support where the phosphor layer is provided 0.1 µm, and peeling of the phosphor layer can be prevented more effectively. Further, by making the above-describe maximum surface roughness not more than 1.0 µm, the layer thickness of the phosphor layer can be made further uniform. Accordingly, a radiographic image conversion panel having high sensitivity and high sharpness, and further easy to handle can be obtained.

Further, the heat resistant resin is preferably, polyimide. The surface roughness of the support can be kept at the most suitable value in phosphor formation by applying polyimide as the heat resistant resin.
Accordingly, phosphors do not peel off from the support, and a radiographic image conversion panel capable of obtaining an image in high sensitivity and high sharpness can be provided.

According to a third aspect of the present invention, the radiographic image conversion panel of the present invention comprises a support having a substrate including a composite material of a matrix resin and a carbon fiber; and a photostimulable phosphor layer provided on one face of the substrate by a vapor phase deposition method, wherein a glass-transition temperature of the matrix resin is not less than 100°C and not more than 300°C.

According to the radiographic image conversion panel in the above-described third aspect, the substrate forming the support in which the photostimulable phosphor layer is provided by the vapor phase deposition method is formed with the composite material (carbon fiber reinforced plastic) including the matrix resin having a glass-transition temperature of not less than 100°C and not more than 300°C and the carbon fiber. By making the glass-transition temperature of the matrix resin not less than 100°C, curvature is prevented from being generated in the substrate by being softened at the time of formation of the phosphor layer. Further, by making the glass-transition of the matrix resin not more than 300°C, molding of the substrate becomes easy and the surface of the substrate can be made smooth.

Further, by including the above-mentioned carbon fiber reinforced plastic in the substrate on which the phosphor layer is provided, radiation loss can be suppressed even though radiation rays are irradiated from the opposite side of the photostimulable phosphor layer by a radiographic imaging apparatus, and the net sensitivity of the phosphor layer can be enhanced. Furthermore, breakage in case of mounting to a radiographic imaging apparatus, insertion to an image reading apparatus, carrying and the like can be prevented, so that handling can become easy.

According to these, a radiographic image conversion panel having sensitivity and sharpness suitable to the purpose of image diagnostic, easy to handle, and without curvature, can be provided.

Further, according to a fourth aspect of the present invention, the radiographic image conversion panel of the present invention comprises a support having a substrate including a composite material of a matrix resin and a carbon fiber, and a heat resistant resin film provided on a face of the substrate; and a photostimulable phosphor layer provided by a vapor phase deposition method on a face of the film opposite side from the substrate, wherein a glass-transition temperature of the matrix resin is not less than 100°C and not more than 300°C.

According to the radiographic image conversion panel in the above-described fourth aspect, the heat resistant resin film is provided on the face of the substrate formed with the carbon fiber reinforced plastic including the matrix resin having a glass-transition temperature of not less than 100°C and not more than 300°C and the carbon fiber, and the photostimulable phosphor resin is provided on the heat resistant resin film. Thus, by providing the heat resistant resin film on the support including the matrix resin having a glass-transition temperature of not less than 100°C and not more than 300°C, the surface of the support can be made smooth easily. Further, since the substrate and the heat resistant resin film are not softened when forming the phosphor layer, the shape of crystals and the like included in the phosphor layer can be prevented from being uneven. Accordingly, high values of sensitivity and sharpness suitable to the purpose of image diagnostic can be provided to the radiographic image conversion panel by controlling the shape and the like of crystals included in the photostimulable phosphor layer.

In the radiographic image conversion panel in the fourth aspect, preferably, the heat resistant resin film comprises a polyimide resin.

By applying the polyimide resin, which is a heat resistant resin having a glass-transition temperature of not less than 100oC, to the heat resistant resin film, high values of sensitivity and sharpness suitable to the purpose of image diagnostic can be provided to the radiographic image conversion panel by controlling the shape and the like of crystals included in the phosphor layer. Further, since the polyimide resin has high heat resistance and is easy to make smooth, it is possible to enhance the properties of the radiographic image conversion panel.

Further, in the above-described third and fourth aspect, the matrix resin is preferably an epoxy resin or a polyimide resin.

By applying a heat resistant resin such as epoxy resin or polyimide resin, which is excellent in adhesiveness with carbon fibers, has high resistance to radiation rays, easy to make smooth and easy to handle, to the heat resistant resin, it becomes possible to enhance the properties of the radiographic image conversion panel.

Furthermore, a weight ratio of the matrix resin against the substrate is preferably, not less than 15% and not more than 60%.

Thus, by making the weight ratio of the matrix resin against the substrate not less than 15%, it becomes easy to mold the substrate in a form that the surface is smooth. Further, by making the above-described weight ratio not more than 60%, it becomes possible to enhance the ratio of the carbon fiber, which is a reinforcement, and rigidity can be provided to the substrate. According to these, a radiographic image conversion panel having sensitivity and sharpness suitable to the purpose of image diagnostic, easy to handle and without curvature, can be provided.

Further, in the radiographic image conversion panel in the above-described first to fourth aspects, preferably, the phosphor layer comprises a photostimulable phosphor represented by the following Formula (1).

$$CsX:yA \qquad (1)$$

In the Formula (1), the X represents Cl, Br or I, the A represents Eu, Sm, In, Tl, Ga or Ce, and a range of the y is not less than $1 \times 10^{-7}$ and not more than $1 \times 10^{-2}$.

By using the photostimulable phosphor represented by Formula (1) the above-describe photostimulable phosphor layer, absorptivity of the phosphor layer to radiation rays can be enhanced, and the sensitivity of the radiographic image conversion panel can be enhanced. Further, since control of the shape and direction of crystals included in the phosphor layer is easy, both high sensitivity and high sharpness can be provided to the radiographic image conversion panel. Further, in Formula (1), by making the range of y not less than $1 \times 10^{-7}$ and not more than $1 \times 10^{-2}$, the sensitivity of the photostimulable phosphor layer can be further enhanced.

BRIEF DESCRIPTION OF THE DRAWINGS

The present invention will become more fully understood from the detailed description given hereinbelow and the appended drawings which given by way of illustration only, and thus are not intended as a definition of the limits of the present invention, and wherein;

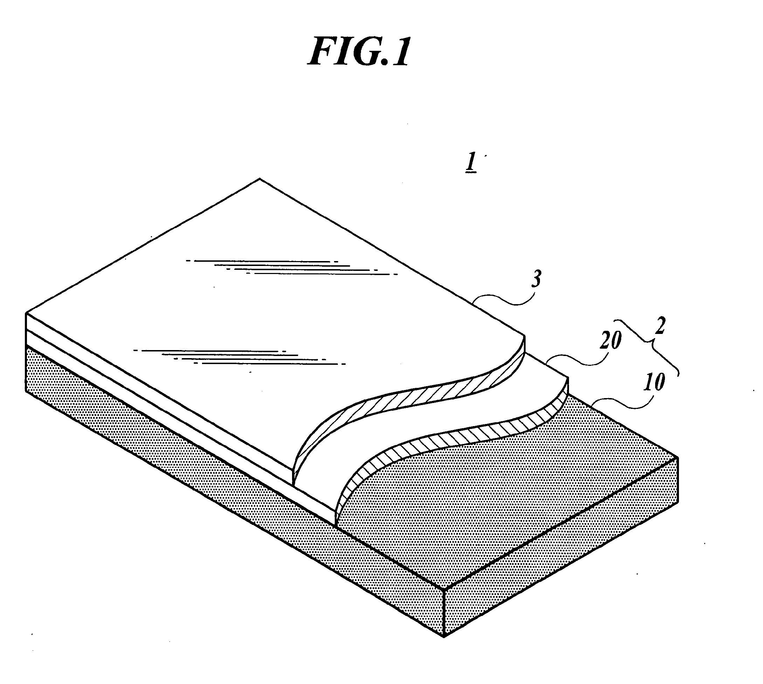

FIG. 1 is a perspective view showing a radiographic image conversion panel 1, a part of which is broken, according to a first and second embodiment of the present invention.

DETAILED DESCRIPTION OF THE INVENTION

Hereinafter, a radiographic image conversion panel 1 according to a first and second embodiment of the present invention will be explained.

[First Embodiment]

In case of performing X-ray image diagnostic to a subject, a radiographic image conversion panel 1 obtains a latent image of the subject by receiving irradiation of the X-rays reached by transmitting through the subject. The radiographic image conversion panel 1 comprises at least a support 2 and a photostimulable phosphor layer 3.

In addition, the radiographic image conversion panel 1 according to the present invention is not limited to obtaining an X-ray image of a human body, but may be used to obtain an X-ray image of an animal, plant or inanimate object.

The support 2 comprises a substrate 10 and a heat resistant resin film 20.

The substrate 10 provides rigidity to the support 2, is for preventing undulation to keep the heat resistant resin film 20 flat, and comprises a carbon fiber reinforced plastic (CFRP). The substrate 10 is prepared by laminating two or more layers of prepregs in which a reinforcement comprising carbon fibers is impregnated with a matrix resin comprising synthetic resins.

Prepregs include a unidirectional prepreg in which carbon fibers are plied in one direction and a woven fabric prepreg in which carbon fibers are woven in plain, twill or the like. It is preferable to apply the unidirectional prepreg to the substrate 10 since it becomes possible to easily keep the heat resistant resin film 20 flat by making influence of the shape of the carbon fibers upon the shape of surface of the support 2 small.

Further, as the matrix resin applied to the prepreg, epoxy resin, vinyl ester resin, nylon, polycarbonate, phenol resin, polyimide and the like are applicable. Among the above-mentioned resins, the epoxy resin is preferable since it is easy to handle because its adhesiveness to the heat resistant resin film 20 and carbon fibers is high and it is easy to obtain surface smoothness. Further, it is also preferable to use the epoxy resin having high heat resistance since curvature is hardly generated on the support 1 at the time of formation of the photostimulable phosphor layer 3.

Further, in case of applying the unidirectional prepreg to the substrate 10, it is preferable to laminate two or more prepregs by making the directions of carbon fibers mutually different since it enhances the mechanical strength and makes handling of the radiographic image conversion panel 1 easy.

The heat resistant resin film 20 is for making a face of the support 2 to be provided with the photostimulable phosphor layer 3 flat in a range capable of controlling the shape and directivity of crystals included in the photostimulable phosphor layer 3, and directly supports the photostimulable phosphor layer 3. The heat resistant resin film 20 is provided such that its one face is attached to one face of the substrate 10 according to a well-known method.

As materials of the heat resistant resin film 20, for example, heat resistant resins such as cellulose acetate, polyester, polyethylene terephthalate, polyamide, polyimide, triacetate, polycarbonate, syndiotactic polystyrene (SPS) and the like are applicable. The above-described heat resistant resins are preferable since they are possible to improve the net sensitivity of the photostimulable phosphor layer 3 because their radiation absorption rates are low and the loss of X-rays when X-ray irradiation is received by the face opposite side from the photostimulable phosphor layer 3 is small.

Further, the glass-transition temperature Tg of the heat resistant resins included in the matrix resin and the heat resistant resin film 20 of the substrate 10 is preferably not less than $100°C$, and further preferably, not less than $120°C$. Here, Tg described in the present specification is the one measured by the differential scanning calorimetry method (DSC method).

It is preferable that the glass-transition temperature of the heat resistant resins satisfies the above-mentioned condition since it becomes possible to easily optimize the shape and directivity of crystals included in the photostimulable phosphor layer 3 by keeping the smoothness of the surface of the heat resistant resin film 20 when forming the photostimulable phosphor layer 3 as described later.

Among the heat resistant resins whose glass-transition temperature satisfies the above-mentioned condition, polyimide is especially preferable since its surface smoothness is high and its adhesiveness with the photostimulable phosphor layer 3 is good.

In addition, the later-described second embodiment is for obtaining advantageous effects of the present invention by further defining the glass-transition temperature.

Further, particularly, in the radiographic image conversion panel 1 according to the first embodiment, the range of the average surface roughness Ra of the face of the heat resistant resin film 20 opposite side from the substrate 10 is preferably 0.05 μm < Ra ≤ 0.5 μm.

When Ra is not more than 0.05 μm, a problem such that the photostimulable phosphor layer 3 peels off easily from the heat resistant resin film 20 occurs because the adhesive force between the heat resistant resin film 20 and the photostimulable phosphor layer 3 is weak. On the other hand, when Ra is above 0.5 μm, a problem such that the sensitivity and sharpness of the radiographic image conversion panel 1 deteriorate occurs because layer thickness unevenness is caused in the photostimulable phosphor layer 3 formed as described later and the crystal shape and directivity are unable to be optimized.

Further, in order to optimize the crystal shape and directivity freely in addition to make the layer thickness of the photostimulable phosphor layer 3 uniform more than the case of the above-mentioned conditions, the range of Ra is further preferably 0.05 μm < Ra ≤ 0.3 μm.

Furthermore, the range of the maximum surface roughness Rz·D (ten point average method) of the face of the heat resistant resin film 20 opposite side from the substrate 10 is preferably 0.1 μm < Rz·D ≤ 1.0 μm.

When Rz·D is not more than 0.1 μm, a problem such that the photostimulable phosphor layer 3 peels off easily from the heat resistant resin film 20 occurs because the adhesive force between the heat resistant resin film 20 and the photostimulable phosphor layer 3 is weak. On the other hand, when Rz·D is above 1.0 μm, a problem such that the sensitivity and sharpness deteriorate occurs because layer thickness unevenness is generated in the photostimulable phosphor layer 3 formed as describe later or because crystal shape deteriorates.

Further, in order to optimize the crystal shape and directivity freely in addition to make the layer thickness of the photostimulable phosphor layer 3 uniform more than the case of the above-mentioned conditions, the range of Rz·D is further preferably 0.1 μm < Rz·D ≤ 0.7 μm.

In order to make the surface roughness of the heat resistant resin film 20 the above-mentioned conditions, it is preferable to measure the average surface roughness Ra and the maximum surface roughness Rz·D of the heat resistant resin film 20 by a well-known surface roughness measurement method such as tracer method, laser interferometric measuring method or the like, and to form the photostimulable phosphor layer 3 with respect to the ones that satisfy the above-mentioned conditions.

Further, polishing may be performed to the face of the heat resistant resin film 20, on which the photostimulable phosphor layer 3 will be formed, before formation of the photostimulable phosphor layer 3. Polishing is performed, for example, by using inorganic system abrasives such as corundum, garnet, silica, flint, emery, diamond, alumina, alumina zirconium, silicon carbide, boron nitride and the like, or organic system abrasives such as phenol resin, rubber, shellac, alkyd resin, epoxy resin, polyurethane resin and the like. The concrete polishing method of the heat resistant resin film 20 or the type, particle size or the like of the abrasive is selected appropriately from well-known ones in accordance with the material of the heat resistant resin film 20 and the surface roughness which should be reached.

The thickness of the support 2 having the above-mentioned substrate 10 and heat resistant resin film 20 is preferably from 100 μm to 10 mm in point of easy handling, and further preferably, from 150 μm to 8 mm. The thickness of the support 2 is determined appropriately according to the materials or the like to be used.

The photostimulable phosphor layer 3 comprises arranged columnar crystals of photostimulable phosphors. The crystals included in the photostimulable phosphor layer 3 are excited by receiving irradiation of X-rays transmitted through a body of a subject in X-ray imaging. Then, the crystals store the energy of the X-rays in a form capable of releasing according to luminescence caused by stimulation of secondary excitation light. Thus, the crystals store the energy of the X-rays, so that the photostimulable phosphor layer 3 obtains a latent image of the subject.

As photostimulable phosphors used in the photostimulable phosphor layer 3 according to the present invention, for example, alkali halide type photostimulable phosphors in which a basic substance comprising halide of metal alkyl is combined with an activator including a metal atom such as Eu, Tb, In, Ce, Tm, Dy, Pr, Ho, Nd, Yb, Er, Gd, Lu, Sm, Y, Tl, Na, Ag, Cu, Mg or the like are applicable.

As photostimulable phosphors, cesium halide type photostimulable phosphors having a composition represented by the Formula (1) are preferable. Here, in Formula (1), X represents Cl, Br or I, and A represents Eu, Sm, In, Tl, Ga or Ce. Then, the range of y is not less than $1 \times 10^{-7}$ and not more than $1 \times 10^{-2}$.

$$CsX:yA \qquad (1)$$

The cesium halide type photostimulable phosphors have high absorptivity in response to X-rays, and moreover, optimization of crystal shape and directivity in preparation of crystals according to the vapor phase deposition method is easy. Therefore, sensitivity and sharpness having a value suitable for image diagnostic can be provided by using crystals of cesium halide type photostimulable phosphors formed by the vapor phase deposition method in the photostimulable phosphor layer 3.

Further, by adding not less than $1 \times 10^{-7}$ and not more than $1 \times 10^{-2}$ of A, which is an activator, to CsX, it becomes possible to emit light efficiently when the crystals receive irradiation of secondary excitation light in a state storing the energy of X-rays.

The photostimulable phosphor layer 3 is preferably formed by the vapor phase deposition method for growing crystals of photostimulable phosphors in vapor phase since it is possible to optimize the shape and directivity of crystals in good accuracy and it is possible to enhance the sensitivity by saving binders and the like and enhancing the bulk density of the photostimulable phosphors. As concrete methods for preparing crystals that belong to a category of the vapor phase deposition method, a deposition method, sputtering method, CVD (Chemical Vapor Deposition) method and the like are preferable.

For example, when applying the deposition method, vapor or raw materials of photostimulable phosphors is provided on the heat resistant resin film 20 at a specific incident angle, and the crystals are grown by vapor phase (called vapor phase deposition method). Thereby, a photostimulable phosphor layer 3 in which independent and elongated columnar crystals are arranged in a flat plane is obtained.

In these cases, the minimal distance between the heat resistant resin film 20 and a crucible is preferably set approximately between 10 cm and 60 cm in accordance with the average range of the photostimulable phosphors.

Since the thickness of the columnar crystals is affected by the temperature of the support, degree of vacuum, incident angle of vapor flow and the like, columnar crystals having the desired thickness can be prepared by optimizing these conditions.

Here, in order to enhance the modulation transfer function (MTF), which becomes an indicator of the sharpness of the photostimulable phosphor layer 3 including columnar crystals, the thickness of the columnar crystals (it is a mean value of diameters of cross sectional area of each columnar crystals when the columnar crystals are observed in a plane parallel to the support converted into a circle, and is calculated by a microphotograph including at least 100 or more columnar crystals in view) is preferably from 1 µm to 50 µm. When the columnar crystals are thinner than 1 µm, the MTF deteriorates since the photostimulated excitation light is scattered according to the columnar crystals. On the other hand, when the columnar crystals are not less than 50 µm, the directivity of the photostimulated excitation light deteriorates, and thereby, the MTF deteriorates. Further, the thickness of the columnar crystals is further preferably from 1 µm to 30 µm.

The void among each columnar crystal is preferably not more than 30 µm. When the void is above 30 µm, a problem such that the filling factor of phosphors in the photostimulable phosphor layer becomes low, and that the sensitivity deteriorates occurs. The void among columnar crystals is further preferably not more than 5 µm.

When the photostimulable phosphor layer 3 is formed on the support 2 according to the deposition method, sputtering method or CVD method, it is performed concretely as follows.

(Deposition method)

In the deposition method, the support 2 is placed in a deposition apparatus, and air in the deposition apparatus is discharged so as to obtain a degree of vacuum of approximately $1.333 \times 10^{-4}$ Pa. Next, at least one of the photostimulable phosphors is heated and evaporated by a method such as resistive heating, electron beam method or the like, and the photostimulable phosphor on the support is piled in a desired thickness on the surface of the support.

As a result, the photostimulable phosphor layer 3 without containing a binder is formed. However, in the above-described deposition step, it is possible to form the photostimulable phosphor layer 3 in plural numbers. Further, in the above-described deposition step, it is possible to perform the deposition by using a plurality of resistance heaters or electron beams.

Further, in the deposition method, it is possible to deposit the photostimulable phosphor raw materials by using a plurality of resistance heaters or electron beams and to form the photostimulable phosphor layer 3 simultaneously by synthesizing the aimed photostimulable phosphor. Moreover, in the deposition method, the material to be deposited may be cooled or heated at the time of deposition according to need. Further, heat treatment may be performed to the photostimulable phosphor layer after the deposition is terminated.

(Sputtering method)

In the sputtering method, similar to the deposition method, the support 2 is placed in a sputtering apparatus, and air in the sputtering apparatus is discharged so as to obtain a degree of vacuum of approximately $1.333 \times 10^{-4}$

Pa. Next, inert gas such as Ar, Ne or the like is introduced into the sputtering apparatus as gas for sputtering, and a gas pressure is made to $1.333 \times 10^{-1}$ Pa. Next, sputtering is performed obliquely by using the photostimulable phosphors as targets, and the photostimulable phosphors are piled in a desired thickness on the surface of the support.

In this sputtering step, similar to the deposition method, it is possible to form the photostimulable phosphor layer 3 in plural numbers. It is also possible to form the photostimulable phosphor layer 3 by simultaneously or sequentially sputtering the above-described targets, respectively. Further, in the sputtering method, it is possible to form the aimed photostimulable phosphor layer 3 on the support by using a plurality of photostimulable phosphor raw materials as targets and simultaneously or sequentially sputtering these targets. Reactive sputtering also may be performed by introducing gas such as $O_2$, $H_2$ or the like according to need. Furthermore, in the sputtering method, the material to be deposited may be cooled or heated at the time of sputtering according to need. Further, heat treatment may be performed to the photostimulable phosphor layer 3 after the sputtering is terminated.

(CVD method)

The CVD method is for obtaining the photostimulable phosphor layer 3 without containing a binder on the support by decomposing an organometallic compound containing the aimed photostimulable phosphors or photostimulable phosphor raw materials according to energy such as heat, highfrequency power or the like. It becomes possible to grow the photostimulable phosphors into individual and elongated columnar crystals by vapor phase.

The range of the layer thickness of the photostimulable phosphor layer 3 formed by each of the above-described methods is preferably from 10 μm to 1000 μm, and further preferably, from 20 μm to 800 μm, although it differs according to the sensitivity of the aimed radiographic image conversion panel in response to radiation rays, the type of photostimulable phosphors, and the like.

Further, when the photostimulable phosphor layer 3 is prepared by using the above-described vapor phase deposition method, the photostimulable phosphors, which become evaporation source, are charged in a crucible by dissolving them uniformly, by molding them with a press or hot press or by making them into powders. In this case, it is preferable to perform degassing. In order to evaporate the photostimulable phosphors from the evaporation source, there is a method for scanning electron beams emitted from an electron gun, or a method of using a resistance heater may be used. However, methods besides these can be used to evaporate the photostimulable phosphors.

Further, the evaporation source is not required to be photostimulable phosphors. It may be the one in which photostimulable phosphor raw materials are mixed.

Further, the photostimulable phosphor layer 3 may be formed by evaporating after previously mixing the basic substance and the activator, or may be formed by a procedure such that the activator is doped after growing the crystals of the basic substance. For example, in case of doping the activator afterward, Eu, which is an activator, may be doped after depositing only a Cs salt, which is a basic substance. Doping can be performed by thermal diffusion and ion implantation method of a doping agent (activator) into a basic substance layer of the formed phosphors.

Since the photostimulable phosphor layer 3 formed on the face of the heat resistant resin film 20 in this manner does not contain a binder, it is excellent in directivity. Therefore, it becomes possible to make the directivity of photostimulated excitation light and photostimulated luminescence higher and to make the layer thickness thicker than a radiographic image conversion panel having a dispersion type photostimulable phosphor layer in which photostimulable phosphors are dispersed in a binder. Furthermore, the sharpness of images improves since scattering of photostimulated excitation light in the photostimulable phosphor layer is reduced.

Further, a filling material such as binder or the like may be filled in voids among columnar crystals for reinforcement. Further, materials having high optical absorption rate, materials having high optical reflectance, and the like may also be filled in the above-described voids. Thereby, a reinforcement effect can be obtained, and moreover, it becomes possible to almost completely prevent optical dispersion in the transverse direction of the photostimulated excitation light inputted in the photostimulable phosphor layer 3.

The materials having high optical reflectance means the ones having high reflectance in response to the secondary excitation light (500 nm to 900 nm, particularly, 600 nm to 800 nm). For example, metals such as aluminum, magnesium, silver, indium and the like, white pigments and color materials from green to red region can be used.

The white pigments can also reflect photostimulated luminescence. As the white pigments, $TiO_2$ (anatase type, rutile type), MgO, $PbCO_3 \cdot Pb(OH)_2$, $BaSO_4$, $Al_2O_3$, M(II)FX (wherein M(II) is at least one of Ba, Sr and Ca and X is at least one of Cl and Br), $CaCO_3$, ZnO, $Sb_2O_3$, $SiO_2$, $ZrO_2$, lithopone ($BaSO_4 \cdot ZnS$), magnesium silicate, basic lead silicosulfate, basic lead phosphate, aluminum silicate and the like are applicable. These white pigments have strong covering power and large refractive index. Therefore, the photostimulated luminescence can be scattered easily by reflecting and refracting light, so that it is possible to improve remarkably the sensitivity of the obtained radiographic image conversion panel 1.

Further, as the materials having high optical absorption rate, for example, carbon, chromium oxide, nickel oxide, iron oxide and the like, and color material of blue can be used. Among these, carbon also absorbs the photostimulated luminescence.

Further, the color materials may be either organic system color materials or inorganic system color materials. As the organic system color materials, Zabon Fast Blue 3G (produced by Hoechst), Estrol Brill Blue N-3RL (produced by Sumitomo Chemical), D & C Blue No. 1 (produced by National Aniline), Spirit Blue (produced by Hodogaya Chemical), Oil Blue No. 603 (produced by Orient), Kiton Blue A (produced by Chiba-Geigy), Aizen Catiron Blue GLH (produced by Hodogaya Chemical), Lake Blue AFH (produced by Kyowa Sangyo), Primocyanine 6GX (produced by Inabata & Co.), Brill Acid Green 6BH (produced by Hodogaya Chemical), Cyan Blue BNRCS (produced by Toyo Ink), Lionoil Blue (produced by Toyo Ink) and the like, or organic system metal complex salt color materials such as color index Nos. 24411, 23160, 74180, 74200, 22800, 23154, 23155, 24401, 14830, 15050, 15760, 15707, 17941, 74220, 13425, 13361, 13420, 11836, 74140, 74380, 74350, 74460 and the like are applicable. As the inorganic system color materials, permanent blue, cobalt blue, cerulean blue, chromium oxide, $TiO_2$-ZnO-Co-Ni system pigments are applicable.

Further, as photostimulable phosphors included in the photostimulable phosphor layer 3 of the radiographic image conversion panel 1 of the present invention, besides the cesium halide type phosphors represented by Formula (1), for example, phosphors represented by Formula of $BaSO_4{:}A_x$ disclosed in Japanese Patent Application Laid-Open Publication No. 48-80487; phosphors represented by $MgSO_4{:}A_x$ disclosed in Japanese Patent Application Laid-Open Publication No. 48-80488; phosphors represented by $SrSO_4{:}A_x$ disclosed in Japanese Patent Application Laid-Open Publication No. 48-80489; phosphors disclosed in Japanese Patent Application Laid-Open Publication No. 51-29889, in which at least one of Mn, Dy and Tb is added to $Na_2SO_4$, $CaSO_4$, $BaSO_4$ or the like; phosphors disclosed in Japanese Patent Application Laid-Open Publication No. 52-30487, such as BeO, LiF, $MgSO_4$ $CaF_2$ and the like; phosphors disclosed in Japanese Patent Application Laid-Open Publication No. 53-39277, such as $Li_2B_4O_7{:}Cu,Ag$ and the like; phosphors disclosed in Japanese Patent Application Laid-Open Publication No. 54-47883, such as $Li_2O{\cdot}(Be_2O_2)_x{:}Cu$, Ag and the like; phosphors represented by SrS:Ce,Sm, SrS:Eu,Sm, $La_2O_2S{:}Eu,Sm$ and (Zn,Cd)S:Mnx disclosed in U.S. Patent No. 3,859,527 and the like are applicable. Moreover, ZnS:Cu,Pb phosphors disclosed in Japanese Patent Application Laid-Open Publication No. 55-12142; barium aluminate phosphors whose Formula is represented by $BaO{\cdot}xAl_2O_3{:}Eu$; or alkaline earth metal silicate system phosphors whose Formula is represented by $M(II)O{\cdot}xSiO_2{:}A$ are also applicable.

Further, alkaline earth fluorohalide phosphors disclosed in Japanese Patent Application Laid-Open Publication No. 55-12143 and represented by Formula of $(Ba_{1-x-y}Mg_xCa_y)\,F_x{:}\,Eu^{2+}$; phosphors disclosed in Japanese Patent Application Laid-Open Publication No. 55-12144 and represented by Formula of LnOX:xA; phosphors disclosed in Japanese Patent Application Laid-Open Publication No. 55-12145 and represented by Formula of $(Ba_{1-x}M(II)_x)F_x{:}yA$; phosphors disclosed in Japanese Patent Application Laid-Open Publication No. 55-84389 and represented by Formula of BaFX:xCe,yA; rear-earth element-activating bivalent metal fluorohalide phosphors disclosed in Japanese Patent Application Laid-Open Publication No. 55-160078 and represented by Formula of $M(II)FX{\cdot}xA{:}uLn$; phosphors represented by Formula of ZnS:A, CdS:A and (Zn,Cd)S:A,X; phosphors disclosed in Japanese Patent Application Laid-Open Publication No. 59-38278 and represented by either of the following Formulas:

$$xM_3(PO_4)_2 \cdot NX_2{:}\ yA$$

$$xM_3(PO_4)_2{:}\ yA;$$

phosphors disclosed in Japanese Patent Application Laid-Open Publication No. 59-155487 and represented by either of the following Formulas:

$$nReX_3 \cdot mAX'_2{:}\ xEu$$

$$nReX_3 \cdot mAX'_2{:}\ xEu,ySm;$$

alkali halide phosphors disclosed in Japanese Patent Application Laid-Open Publication No. 61-72087 and represented by the following Formula:

$$M(I)X \cdot aM(II)X'_2 \cdot bM(III)X''_3{:}\ cA;$$

bismuth-activating alkali halide phosphors disclosed in Japanese Patent Application Laid-Open Publication No.

61-228400 and represented by Formula of M(I)X:xBi, and the like are applicable.

Particularly, the alkali halide phosphors are preferable since columnar photostimulable phosphor layer is easily formed according to the deposition, sputtering methods and the like.

Further, as mentioned above, the CsBr system phosphors among the alkali halide phosphors are preferable since they have high luminance and high image quality.

In addition, the radiographic image conversion panel 1 according to the present invention is not limited to the examples mentioned above. The radiographic image conversion panel 1 according to the above-described first embodiment may be free from the substrate 10 of carbon fiber reinforced plastics, and the support 2 may be formed only by heat resistant resin film.

Further, the heat resistant resin film 20 may be provided on both faces of the substrate 10, or two or more of them may be provided by being piled on one face of the substrate 10. Furthermore, the photostimulable phosphor layer 3 may be provided on both faces of the support 2.

Further, the radiographic image conversion panel 1 may comprise the photostimulable phosphor layer 3 protected by a dampproof protective material.

Moreover, the radiographic image conversion panel 1 may be formed so as to respond to other radiation rays applied in image diagnostic, such as β rays, positron beams, γ rays, neutron beams and the like, besides X-rays.

[Second Embodiment]

In the above-mentioned first embodiment, the effects of the present invention are obtained by defining the average surface roughness Ra and the maximum surface roughness Rz·D in the face of the support 2 to be provided with the photostimulable phosphor layer 3. However, in the second embodiment, the glass-transition temperature of the matrix resin included in the support 2 and the weight ratio of the matrix resin to the substrate 10 are defined, and other points are the same as in the first embodiment. Therefore, in the second embodiment, only the different points will be explained, and the explanation of the same points will be omitted.

In the second embodiment, the glass-transition temperature Tg of the matrix resin of prepregs is preferably not less than 100°C and not more than 300°C.

The reason why the glass-transition temperature Tg is made in the range described above will be described herein. When the photostimulable phosphor layer 3 is formed by growing the crystals of photostimulable phosphors according to the above-mentioned vapor phase deposition method (vapor phase method), the substrate 10 is exposed in a temperature condition of 100°C or more. Accordingly, when the glass-transition temperature of the matrix resin is less than 100°C, problems such that large curvature of the substrate 10 is generated since the matrix resin is softened, that the photostimulable phosphor layer 3 is cracked, and that the image quality of the obtained images deteriorates occur.

On the other hand, when the glass-transition temperature of the matrix resin is above 300°C, molding of the substrate 10 in high accuracy becomes difficult, and as a result, the surface of the substrate 10 becomes rough and the shape and directivity of the crystals included in the photostimulable phosphor layer 3 becomes uneven. Therefore, a problem such that sensitivity and sharpness suitable for the purpose of image diagnostic cannot be provided to the photostimulable phosphor layer 3 occurs.

Further, the glass-transition temperature of the matrix resin is further preferably not less than 120°C and not more than 250°C.

That is, by making the glass-transition temperature not less than 120°C, curvature of the support 2 can be suppressed, and control of the shape and directivity of the photostimulable phosphor crystals according to temperature control at the time of crystal growth becomes easy. Further, by making the glass-transition temperature not more than 250°C, molding of the substrate 10 in high accuracy becomes further easy. Thereby, it becomes easy to provide sensitivity and sharpness having high value suitable for the purpose of image diagnostic to the photostimulable phosphor layer 3.

The resins satisfying the above-mentioned conditions regarding the glass-transition temperature and applicable to the substrate 10 include epoxy resin, vinyl ester resin, nylon, polycarbonate, phenol resin, polyimide resin and the like. Among these, the epoxy resin and polyimide resin are easy to handle because their adhesiveness with carbon fibers is high and their smoothness is high. Therefore, the epoxy resin and polyimide resin are preferable since they can provide high property to the substrate 10.

Further, the percentage (resin content) of the matrix resin in the whole substrate 10 is preferably not less than 15% and not more than 60% in weight ratio.

When the percentage of the matrix resin in the whole substrate 10 is below 15%, molding of the substrate 10 in high accuracy becomes difficult, and a problem such that sensitivity and sharpness suitable for the purpose of image diagnostic cannot be provided to the photostimulable phosphor layer 3 occurs.

On the other hand, when the percentage of the matrix resin is above 60%, the percentage of carbon fibers is reduced and the rigidity of the substrate 10 deteriorates, so that curvature is easily generated. Therefore, problems such that the photostimulable phosphor layer 3 is cracked, and that the image quality of the obtained images deteriorates occur.

Further, the percentage of the matrix resin in the whole substrate 10 is further preferably not less than 20% and not more than 55% in weight ratio.

By making the percentage of the resin not less than 20%, molding of the substrate 10 in high accuracy becomes easy, and optimization of the shape and directivity of the crystals included in the photostimulable phosphor layer 3 can be performed easily. Accordingly, it becomes easy to provide a photostimulable phosphor layer 3 suitable for the purpose of image diagnostic.

Further, by making the percentage of the resin not more than 55%, high rigidity can be provided by the substrate 10. Therefore, generation of curvature can be prevented more effectively.

Moreover, the heat resistant resin film 20 included in the support 2 is for directly supporting the photostimulable phosphor layer 3, similarly to the first embodiment, and is provided by being mutually attached to the substrate at one face according to a well-known method. By providing the heat resistant resin film 20 to the substrate 10, the influence of the shape of carbon fibers of the substrate 10 to the surface shape of the support 2 becomes extremely small. Therefore, it becomes easy to make the surface of the support 2 smooth.

As materials of the heat resistant resin film 20, for example, sheets comprising heat resistant resins such as cellulose acetate, polyester, polyethylene terephthalate, polyamide, polyimide, triacetate, polycarbonate, syndiotactic polystyrene (SPS) and the like are applicable.

Further, particularly, the glass-transition temperature Tg of the heat resistant resins applied to the heat resistant resin film 20 is preferably not less than 100°C, and further preferably, not less than 120°C. It is preferable that the glass-transition temperature of the heat resistant resins satisfies the above-mentioned conditions since softening of the heat resistant resin film 20 at the time of formation of the photostimulable phosphor layer 3 as described later is suppressed and the shape and directivity of the crystals included in the photostimulable phosphor layer 3 can be optimized easily by maintaining smoothness of the surface.

Among the heat resistant resins whose glass-transition temperature satisfies the above-mentioned conditions, the polyimide resin is particularly preferable since the smoothness is high.

The thickness of the support 2 having the above-mentioned substrate 10 and heat resistant resin film 20 is preferably from 100 μm to 10 mm in point of easy handling, and further preferably, from 150 μm to 8 mm. The thickness of the support 2 is determined appropriately according to the materials to be used and the like.

In addition, the radiographic image conversion panel 1 according to the present invention is not limited to the examples mentioned above. The support 2 of the radiographic image conversion panel 1 according to the above-described second embodiment may be free from the heat resistant resin film 20, and the photostimulable phosphor layer 3 may be supported directly by the substrate 10. Further, the heat resistant resin film 20 may be provided on both faces of the substrate 10.

Further, the radiographic image conversion panel 1 may comprise the photostimulable phosphor layer 3 protected by a dampproof protective material.

Moreover, the radiographic image conversion panel 1 may be formed so as to respond to other radiation rays applied in image diagnostic, such as β rays, positron beams, γ rays, neutron beams and the like, besides X-rays.

EXAMPLES

Hereinafter, the present invention will be explained concretely by providing (A) Examples corresponding to the first embodiment (Example 1 to Example 10 and Comparative Example 1 to Comparative Example 8) and (B) Examples corresponding to the second embodiment (Example 11 to Example 20 and Comparative Example 11 to Comparative Example 15), respectively. However, the embodiment of the present invention is not limited to these Examples.

(A)

<<Preparation of Radiographic image conversion panel 1 according to Example 1>>

A carbon fiber reinforced plastic having a length of 509 mm, width of 500 mm and thickness of 3 mm, in which unidirectional prepregs having a matrix of epoxy resin are laminated, was applied as the substrate 10, and a polyimide sheet having a length of 509 mm, width of 500 mm and thickness of 125 μm was applied as the heat resistant resin film 20.

The substrate 10 and the heat resistant resin film 20 were bonded under pressure at 130°C by a hot press. Thereafter, the average surface roughness Ra and the maximum surface roughness Rz·D of the heat resistant resin film 20 were measured. In measurement of Ra and Rz·D, a surface roughness meter SURFCOM (trademark) 1500A provided by Tokyo Seimitsu Co., Ltd. was used. As the measurement conditions, a vertical magnification of 10k, a horizontal magnification of AUTO, measurement length of 2 mm, movement speed of 0.3 mm/s, cutoff of undulation of 2.5 mm and N=3 were used.

Formation of the photostimulable phosphor layer 3 was performed by the deposition method.

At first, the support 2 was charged in a vacuum chamber, and the pressure inside of the vacuum chamber was reduced so as to make the degree of vacuum into $1 \times 10^{-3}$ Pa. Then, nitrogen gas was introduced and alkali halide phosphors comprising CsBr:0.001Eu were piled on the surface of the heat resistant resin film 20 by keeping the degree of vacuum at $1 \times 10^{-2}$ Pa. Gasification of CsBr:0.001Eu was performed by resistance heating method. As a slit, the one made of aluminum was used, and the distance between the support 2 and the slit was made to 50 cm. Deposition was performed by carrying the support 2 toward the direction parallel to the support 2, and the photostimulable phosphor layer 3 having columnar structure of 300 μm thickness was formed. Thus, a radiographic image conversion panel 1 was prepared.

Further, with respect to Examples 2 to 5 and Comparative Examples 1 to 4, each radiographic image conversion panel 1 was prepared by changing the type of prepregs or the value of surface roughness as shown in Tables 1-1 and 1-2. Other conditions were the same as in Example 1.

<<Preparation of Radiographic image conversion panel 1 according to Example 6>>

A radiographic image conversion panel 1 was prepared by applying a polyimide plate having a length of 509 mm, width of 500 mm and thickness of 2000 μm as the support 2. The procedure of preparation was the same as in Example 1 except that adhesion of the substrate 10 and the heat resistant resin film 20 was omitted.

Further, with respect to Examples 7 to 10 and Comparative Examples 5 to 8, each radiographic image conversion panel 1 was prepared by changing the type of prepregs or the value of surface roughness as shown in Tables 1-1 and 1-2. Other conditions were the same as in Example 6.

<<Evaluation of Sensitivity>>

Evaluation of sensitivity was performed with respect to each radiographic image conversion panel 1 of Examples 1 to 10 and Comparative Examples 1 to 8 as follows.

X-rays were irradiated to each radiographic image conversion panel 1 at a tube voltage of 80 kVp, exposure dose of 10 mAs. The distance between the radiation source and the radiographic image conversion panel 1 was 2 m at the time of irradiation. Thereafter, laser beams were irradiated from a radiographic image reading apparatus Regius 350 produced by Konica Corporation and the photostimulable phosphor layer 3 was made to emit lights. Then, sensitivity was evaluated by the average value of the intensity of electric signals outputted from a photoelectric multiplier at the time of emission in the whole photostimulable phosphor layer 3. In Table 1-2, relative sensitivities are shown by using the sensitivity of Example 3 measured in the above-mentioned procedure as 1.0.

<<Evaluation of Sharpness>>

Evaluation of sharpness was performed by obtaining the modulation transfer function (MTF). After a CTF chart was stuck on each radiographic image conversion panel 1, X-rays were irradiated to each radiographic image conversion panel 1 at a tube voltage of 80 kVp, exposure dose of 10 mR. At that time, the distance between the radiation source and the radiographic image conversion panel 1 was 1.5 m. After irradiation, the CTF chart image was read by using a semiconductor laser beams having a diameter of 100 μm, wavelength of 680 nm and radiant flux of 40 mW, and the MTF was obtained. The MTF values at spatial frequency of 2.01 p/mm are shown in Table 1-2. In this case, the higher the MTF value is, the better the sharpness is.

<<With or Without Peeling>>

The presence or absence of the peeling of the photostimulable phosphor layer 3 from the support 2 was confirmed by the presence or absence of the dropping of crystals at the time of formation of the photostimulable phosphor layer 3 by growing crystals downwardly according to deposition.

Table 1-1

| | HEAT RESISTANT RESIN FILM (SHEET) | CFRP SUBSTRATE | AVERAGE SURFACE ROUGHNESS Ra/μm |
|---|---|---|---|
| EXAMPLE 1 | POLYIMIDE | UNIDIRECTIONAL | 0.09 |
| 2 | POLYIMIDE | UNIDIRECTIONAL | 0.27 |
| 3 | POLYIMIDE | UNIDIRECTIONAL | 0.46 |
| 4 | POLYIMIDE | TWILLED | 0.23 |
| 5 | POLYIMIDE | TWILLED | 0.48 |
| 6 | POLYIMIDE | NIL | 0.08 |
| 7 | POLYIMIDE | NIL | 0.25 |
| 8 | POLYIMIDE | NIL | 0.41 |
| 9 | POLYESTER | NIL | 0.06 |
| 10 | POLYESTER | NIL | 0.31 |
| COMPARATIVE EXAMPLE 1 | POLYIMIDE | UNIDIRECTIONAL | 0.65 |
| 2 | POLYIMIDE | UNIDIRECTIONAL | 0.46 |
| 3 | POLYIMIDE | UNIDIRECTIONAL | 0.04 |
| 4 | POLYIMIDE | TWILLED | 0.62 |
| 5 | POLYIMIDE | NIL | 0.54 |
| 6 | POLYIMIDE | NIL | 0.42 |
| 7 | POLYIMIDE | NIL | 0.04 |
| 8 | POLYESTER | NIL | 0.57 |

Table 1-2

| | MAXIMUM SURFACE ROUGHNESS Rz·D/μm | RELATIVE SENSITIVITY | SHARPNESS (MTF)% | WITH OR WITHOUT PEELING |
|---|---|---|---|---|
| EXAMPLE 1 | 0.16 | 1.10 | 39 | WITHOUT |
| 2 | 0.53 | 1.09 | 37 | WITHOUT |
| 3 | 0.92 | 1.00 | 33 | WITHOUT |
| 4 | 0.32 | 1.10 | 37 | WITHOUT |
| 5 | 0.98 | 0.97 | 31 | WITHOUT |
| 6 | 0.15 | 1.15 | 39 | WITHOUT |
| 7 | 0.51 | 1.12 | 38 | WITHOUT |
| 8 | 0.88 | 1.08 | 37 | WITHOUT |
| 9 | 0.12 | 0.98 | 31 | WITHOUT |
| 10 | 0.72 | 0.94 | 30 | WITHOUT |
| COMPARATIVE EXAMPLE 1 | 1.11 | 0.83 | 27 | WITHOUT |
| 2 | 1.18 | 0.78 | 28 | WITHOUT |
| 3 | 0.09 | 0.71 | 19 | WITH |
| 4 | 1.25 | 0.76 | 25 | WITHOUT |
| 5 | 1.05 | 0.88 | 27 | WITHOUT |
| 6 | 1.24 | 0.79 | 26 | WITHOUT |
| 7 | 0.08 | 0.75 | 20 | WITH |
| 8 | 1.10 | 0.72 | 23 | WITHOUT |

According to Tables 1-1 and 1-2, in the case that the average surface roughness Ra of the support 2 was not less than 0.06 μm and not more than 0.48 μm and the maximum surface roughness Rz·D thereof was not less than 0.12 μm and not more than 0.98 μm, the relative sensitivity was 0.94 to 1.15 and the sharpness was 30% to 39%.

On the other hand, with respect to Comparative Examples 1, 4, 5 and 8, Ra of which was above 0.5 μm, and with respect to Comparative Examples 2 and 6, although Ra of which was not more than 0.5 μm, Rz·D of which was above 1.0 μm, there was no peeling of the photostimulable phosphor layer 3. However, the relative sensitivity was 0.88 or less and the sharpness was 28% or less.

Further, with respect to Comparative Examples 3 and 7, Ra of which was less than 0.05 μm and Rz·D of which was less than 0.10 μm, the photostimulable phosphor layer 3 was peeled off from the support 2, and moreover, the relative sensitivity was 0.75 or less and the sharpness was 20% or less.

Thus, the photostimulable phosphor layer 3 is provided on the face of the support 2 comprising the heat resistant resins according to the vapor phase deposition method, and the ranges of the average surface roughness Ra and the maximum surface roughness Rz·D of the face of the support 2 to be provided with the photostimulable phosphor layer 3 are made to 0.05 μm < Ra ≤ 0.5 μm and 0.1 μm < Rz·D ≤ 1.0 μm. Thereby, optimization of the shape and directivity of the crystals of photostimulable phosphors included in the photostimulable phosphor layer 3 becomes possible. Further, since the photostimulable phosphor layer 3 can be prevented from peeling off from the support 2, mounting of the radiographic image conversion panel 1 to a radiographic imaging apparatus, incorporation of it into a reading apparatus, handling in case of carrying it, and the like can be made easy. Accordingly, a radiographic image conversion panel having high sensitivity and high sharpness, and moreover, easy to handle cay be provided.

(B)

<<Preparation of Radiographic image conversion panel 1 according to Example 11>>

A carbon fiber reinforced plastic having a length of 509 mm, width of 500 mm and thickness of 3 mm, in which unidirectional prepregs (resin content of 33%) having epoxy resins (Tg=130°C) as matrix resins are laminated, was applied as the substrate 10, and a polyimide sheet having a length of 509 mm, width of 500 mm and thickness of 125 μm was applied as the heat resistant resin film 20.

Formation of the photostimulable phosphor layer 3 was performed by the deposition method.

At first, the substrate 10 and the heat resistant resin film 20 were bonded under pressure of $4.9 \times 10$ N/cm$^2$ and at a temperature of 130°C by a hot press. Then, the bonded material was charged in a vacuum chamber, and the pressure inside of the vacuum chamber was reduced so as to make the degree of vacuum into $1 \times 10^{-3}$ Pa. Thereafter, nitrogen gas was introduced and alkali halide phosphors comprising CsBr:0.001Eu were piled on the surface of the heat resistant resin film 20 by keeping the degree of vacuum at $1 \times 10^{-2}$ Pa. Gasification of CsBr:0.001Eu was performed by the resistance heating method. As a slit, the one made of aluminum was used, and the distance between the heat resistant resin film 20 and the slit was made to 50 cm. Deposition was performed by carrying the support 2 toward the direction parallel to the heat resistant resin film 20, and the photostimulable phosphor layer 3 having columnar structure of 300 μm thickness was formed. Thus, a radiographic image conversion panel 1 was prepared.

Further, with respect to Examples 12 and 13 and Comparative Example 11, each radiographic image conversion panel 1 was prepared by changing the Tg value, resin content and material of the heat resistant resin film 20 as shown in Table 2. Other conditions were the same as in Example 11.

<<Preparation of Radiographic image conversion panel 1 according to Example 14>>

A carbon fiber reinforced plastic having a length of 509 mm, width of 500 mm and thickness of 3 mm, in which unidirectional prepregs (resin content of 33%) having epoxy resins (Tg=100°C) as matrix resins are laminated, was applied as the substrate 10, and a radiographic image conversion panel 1 without heat resistant resin film 20 was prepared. The procedure of preparation was the same as in Example 11 except that adhesion of the substrate 10 and the heat resistant resin film 20 was omitted.

Further, with respect to Examples 15 to 20 and Comparative Examples 12 to 15, each radiographic image conversion panel 1 was prepared by changing the type of resin, Tg and resin content as shown in Table 2. Other conditions were the same as in Example 14.

<<Evaluation of Sensitivity>>

Evaluation of sensitivity was performed with respect to each radiographic image conversion panel 1 of Examples 11 to 20 and Comparative Examples 11 to 15 as follows.

X-rays were irradiated to each radiographic image conversion panel 1 at a tube voltage of 80 kVp, exposure dose of 10 mAs. The distance between the radiation source and the radiographic image conversion panel 1 was 2 m at the time of irradiation. Thereafter, laser beams were irradiated from a radiographic image reading apparatus Regius 350 produced by Konica Corporation and the photostimulable phosphor layer 3 was made to emit lights. Then, sensitivity was evaluated by the average value of the intensity of electric signals outputted from a photoelectric multiplier at the time of emission. In Table 2, relative sensitivities are shown by using the sensitivity of Example 14 measured in the above-mentioned procedure as 1.1.

<<Evaluation of Sharpness>>

Evaluation of sharpness was performed by obtaining the modulation transfer function (MTF). After a CTF chart was stuck on each radiographic image conversion panel 1, X-rays were irradiated to each radiographic image conversion panel 1 at a tube voltage of 80 kVp, exposure dose of 10 mR. At that time, the distance between the radiation source and the radiographic image conversion panel 1 was 1.5 m. After irradiation, the CTF chart image was read by using semiconductor laser beams having a diameter of 100 μm, wavelength of 680 nm and radiant flux of 40 mW, and the MTF was obtained. The MTF values at spatial frequency of 2.01 p/mm are shown in Table 2. In this case, the higher the MTF value is, the better the sharpness is.

<<Measurement of Amount of Curvature>>

The amount of curvature was obtained by measuring the distance between a stainless plate having high straightness and the corner of each radiographic image conversion panel 1. Concretely, each distance between the stainless plate and the upper two corners of each radiographic image conversion panel 1 was measured with a gauge in a state that each radiographic image conversion panel 1 was made to stand against the stainless plate. Thereafter, the radiographic image conversion panel 1 was rotated for 180°, and was made to stand against the stainless plate again to measure each distance between the stainless plate and the remaining two corners of the radiographic image conversion panel 1. The maximum value out of four values was made to be the amount of curvature. Here, the angle of each radiographic image conversion panel 1 at the time of measuring the amount of curvature was made to 5° against the above-described stainless plate. The values of amount of curvature obtained by the measurement are shown in Table 2.

Table 2

| | TYPE OF SUBSTRATE RESIN | RESIN Tg/°C | CONTENT OF RESIN /% | TYPE OF HEAT RESISTANT RESIN | RELATIVE SENSITIVITY | SHARPNESS (MTF)/% | AMOUNT OF CURVATURE (MAXIMUM)/mm |
|---|---|---|---|---|---|---|---|
| EXAMPLE 11 | EPOXY | 130 | 33 | POLYIMIDE | 1.20 | 40 | 0.7 |
| 12 | EPOXY | 200 | 33 | POLYIMIDE | 1.18 | 39 | 0.7 |
| 13 | EPOXY | 200 | 33 | ARAMID | 1.17 | 37 | 0.8 |
| 14 | EPOXY | 100 | 33 | NIL | 1.10 | 36 | 0.8 |
| 15 | EPOXY | 130 | 33 | NIL | 1.12 | 37 | 0.6 |
| 16 | EPOXY | 200 | 33 | NIL | 1.08 | 37 | 0.5 |
| 17 | BISMALEIMIDE (POLYIMIDE) | 280 | 33 | NIL | 1.05 | 36 | 0.2 |
| 18 | BISMALEIMIDE | 280 | 55 | NIL | 1.05 | 36 | 0.9 |
| 19 | EPOXY | 200 | 15 | NIL | 1.07 | 37 | 0.3 |
| 20 | EPOXY | 200 | 60 | NIL | 1.06 | 35 | 0.9 |
| COMPARATIVE EXAMPLE 11 | EPOXY | 200 | 33 | ACRYL | 0.42 | 20 | 0.7 |
| 12 | ACRYL | 80 | 33 | NIL | 1.02 | 35 | 1.5 |
| 13 | BISMALEIMIDE | 360 | 33 | NIL | 0.52 | 20 | 0.4 |
| 14 | EPOXY | 200 | 10 | NIL | 0.47 | 22 | 0.7 |
| 15 | EPOXY | 200 | 70 | NIL | 1.04 | 33 | 1.9 |

EP 1 437 744 A2

According to Table 2, in Examples 11 to 13, in which the glass-transition temperature Tg of the matrix resins of the substrate 10 was 130°C or 200°C, the resin content was 33% and polyimide resin or aramid having high heat resistance was applied to the heat resistant resin film 20, high values such as the relative sensitivity of 1.17 to 1.20 and sharpness of 37% to 40% were obtained. Further, the amount of curvature was small value of 0.7 mm or 0.8 mm.

Next, in Examples 14 to 20, in which the glass-transition temperature Tg of the matrix resins of the substrate 10 was from 100°C to 280°C, the resin content was from 15% to 60% and which do not have a heat resistant resin film 20, high values such as the relative sensitivity of 1.05 to 1.12 and sharpness of 35% to 37% were obtained. Further, the amount of curvature was from 0.2 mm to 0.9 mm.

On the contrary, in Comparative Example 11, in which acryl having low heat resistance was applied to the heat resistant resin film 20, Comparative Example 13, in which the glass-transition temperature of the matrix resins of the substrate 10 was 360°C, and Comparative Example 14, in which the resin content of the substrate 10 was 10%, although the amount of curvature was good value of 0.4 mm or 0.7 mm, the relative sensitivity was 0.42 to 0.52 and the sharpness was 20% or 22%, which are low values.

Further, in Comparative Example 12, in which the glass-transition temperature Tg of the matrix resins of the substrate 10 was 80°C, and Comparative Example 15, in which the resin content of the substrate 10 was 70%, although good values of relative sensitivity of 1.02 or 1.04 and sharpness of 35% or 33% were obtained, the amount of curvature was 1.5 mm or 1.9 mm, which is large value.

Thus, in a radiographic image conversion panel 1 prepared by directly providing a photostimulable phosphor layer 3 on a substrate 10 comprising a carbon fiber reinforced plastic having matrix resins or by providing a photostimulable phosphor layer 3 on a substrate 10 through a heat resistant resin film 20, the curvature of the radiographic image conversion panel 1 according to high temperature at the time of forming the photostimulable phosphor layer 3 can be prevented by making the glass-transition temperature of the matrix resins 100°C or more. Therefore, crack of the photostimulable phosphor layer 3 or deterioration of image quality of obtained images can be prevented.

Further, molding of the substrate 10 becomes easy by making the above-described glass-transition temperature 300°C or below, so that the surface of the substrate 10 can be made smooth. Accordingly, high values of sensitivity and sharpness suitable for the purpose of image diagnostic can be provided to the radiographic image conversion panel by controlling the shape and directivity of the crystals included in the photostimulable phosphor layer 3.

Moreover, the influence of the shape of carbon fibers of the substrate 10 to the shape of the surface of the support 2 can be made extremely small by providing the heat resistant resin film 20 on the substrate 10. Accordingly, the smoothness of the surface of the support 2 can be enhanced easily, so that high values of sensitivity and sharpness suitable for the purpose of image diagnostic can be provided to the radiographic image conversion panel by controlling the shape and directivity of the crystals included in the photostimulable phosphor layer 3 in further high accuracy.

In the above, the Examples of the present invention are explained. However, it is needless to say that the present invention is not limited to such Examples, but various modifications are possible in a range within the scope of the present invention.

According to the present invention, a radiographic image conversion panel having sensitivity and sharpness suitable for the purpose of image diagnostic, easy to handle in case of imaging or reading a latent image, and without curvature can be provided.

The entire disclosure of Japanese Patent Applications Nos. 2003-3167 and 2003-3170 filed on January 9, 2003 including specification, claims, drawings and summary are incorporated herein by reference in its entirety.

**Claims**

1. A radiographic image conversion panel comprising:

   a support including a heat resistant resin; and
   a photostimulable phosphor layer provided on a face of the support by a vapor phase deposition method,

   wherein an average surface roughness in the face of the support to be provided with the phosphor layer is above 0.05 μm and not more than 0.5 μm.

2. A radiographic image conversion panel comprising:

   a support having a substrate including a carbon fiber reinforced plastic and a heat resistant resin film including a heat resistant resin, the film being provided on a face of the substrate; and
   a photostimulable phosphor layer provided by a vapor phase deposition method on a face of the film opposite side from the substrate,

wherein an average surface roughness in the face of the film to be provided with the phosphor layer is above 0.05 μm and not more than 0.5 μm.

3. The panel of claim 1 or 2, wherein a maximum surface roughness in a face of the support to be provided with the phosphor layer is above 0.1 μm and not more than 1.0 μm.

4. The panel of any one of claims 1 to 3, wherein the heat resistant resin is polyimide.

5. The panel of any one of claims 2 to 4, wherein in the substrate, two or more layers of unidirectional prepregs are laminated.

6. A radiographic image conversion panel comprising:

   a support having a substrate including a composite material of a matrix resin and a carbon fiber; and
   a photostimulable phosphor layer provided on one face of the substrate by a vapor phase deposition method,

   wherein a glass-transition temperature of the matrix resin is not less than 100°C and not more than 300°C.

7. A radiographic image conversion panel comprising:

   a support having a substrate including a composite material of a matrix resin and a carbon fiber, and a heat resistant resin film provided on a face of the substrate; and
   a photostimulable phosphor layer provided by a vapor phase deposition method on a face of the film opposite side from the substrate,

   wherein a glass-transition temperature of the matrix resin is not less than 100°C and not more than 300°C.

8. The panel of claim 6 or 7, wherein the matrix resin is one of an epoxy resin and a polyimide resin.

9. The panel of claim 8, wherein a weight ratio of the matrix resin against the substrate is not less than 15% and not more than 60%.

10. The panel of any one of claims 7 to 9, wherein the heat resistant resin film comprises a polyimide resin.

11. The panel of any one of claims 1 to 10, wherein the phosphor layer comprises a photostimulable phosphor represented by the following Formula (1),

$$CsX:yA \tag{1}$$

wherein the X represents Cl, Br or I, the A represents Eu, Sm, In, Tl, Ga or Ce, and a range of the y is not less than $1 \times 10^{-7}$ and not more than $1 \times 10^{-2}$.

**FIG.1**